# EUROPEAN PATENT SPECIFICATION

(11) **EP 4 446 707 B1**
(45) Date of publication and mention of the grant of the patent: **11.11.2026**
(21) Application number: 23167741.0
(22) Date of filing: 13.04.2023
(51) Int. Cl.: G01F 15/061, G01F 25/10, H04Q 9/00, G01D 4/00

(54) **CATEGORIZING A DISCREPANCY IN A MEASUREMENT READOUT OF A FLOW METER**
KATEGORISIERUNG EINER DISKREPANZ BEI EINER MESSAUSLESUNG EINES DURCHFLUSSMESSERS
CATÉGORISATION D'UNE DIVERGENCE DANS UNE LECTURE DE MESURE D'UN DÉBITMÈTRE

(43) Date of publication of application: 16.10.2024
(73) Proprietor: Waltero Holding AB, 223 63 Lund (SE)
(72) Inventor: Storm, Kristian, 24562 HJÄRUP (SE); Lindoff, Bengt, 23735 BJÄRRED (SE)
(74) Representative: AWA Sweden AB

(56) References cited:
- CA-A1- 3 154 212
- US-A1- 2019 297 395
- US-A1- 2021 174 085
- US-B2- 11 505 924
- KANNO JUMPEI ET AL: "Automatic Reading of Flow Meters Based on Classification Deep Neural Network", 2022 IEEE INTERNATIONAL CONFERENCE ON CONSUMER ELECTRONICS-ASIA (ICCE-ASIA), IEEE, 26 October 2022 (2022-10-26), pages 1 - 5, XP034235728, [retrieved on 20221128], DOI: 10.1109/ICCE-ASIA57006.2022.9954842
- LALL A KUMAR ET AL: "Making Analog Water Meter Smart using ML and IoT-based Low-Cost Retrofitting", 2021 8TH INTERNATIONAL CONFERENCE ON FUTURE INTERNET OF THINGS AND CLOUD (FICLOUD), IEEE, 23 August 2021 (2021-08-23), pages 157 - 162, XP034015604, [retrieved on 20211026], DOI: 10.1109/FICLOUD49777.2021.00030

## Description

### Technical field

The present invention relates to categorizing a discrepancy in a measurement readout from a first measurement module configured to obtain measurement readouts of analog numbers and/or analog pointers displayed by an analog flow meter by using computer vision. The analog flow meter being configured to measure a flow of a fluid in a supply line.

### Background

Most of the fluid flow meters of today, e.g. water and gas flow meters, are analog. Such fluid flow meters are for example configured to measure an amount of water/gas consumed. Such fluid flow meters are configured to display the amount of water/gas consumed with analog numbers and/or analog pointers. Such analog flow meters are typically not connected to a communication network and therefore collecting information about the consumption need to be done manually. This process is time consuming and costly. Therefore, information about the consumption is collected seldom, typically one or a few times per year.

This implies that the detection time for anomaly event such as possible leakages may take very long time with risk for wasting a significant amount of resources and/or inducing great damage.

Changing the analog flow meters to digital flow meters connected to a communication network is a solution to this problem. However, changing the analog flow meters to digital flow meters connected to a communication network comes with a cost and expertise knowledge since fluid flowing in the supply line need to be interrupted/stopped during replacement.

The document US11505924 discusses systems and methods for monitoring fluid distribution within a fluid distribution network.

### Summary of the invention

According to a first aspect a method for categorizing a discrepancy in a measurement readout from a first measurement module configured to obtain measurement readouts of analog numbers and/or analog pointers displayed by an analog flow meter by using computer vision is provided. The method comprising: comparing the measurement readout of the first measurement module with historical measurement readouts of the first measurement module thereby determining whether a discrepancy in the measurement readout of the first measurement module is present or not; and upon a discrepancy in the measurement readout of the first measurement module is present, categorizing the discrepancy as a measurement error or an anomaly by comparing a sum of a respective measurement readout from each of a first set of measurement modules belonging to a first hierarchical level in which first set the first measurement module is a member with an aggregate of a respective measurement readout from each of a second set of measurement modules belonging to a second hierarchical level, the second hierarchical level being upstream the first hierarchical level, wherein the sum of the measurement readouts from the first set of measurement modules is substantially equal to the aggregate of measurement readouts from the second set of measurement modules if no measurement error is present, and wherein the discrepancy is categorized as a measurement error if a difference between the aggregate of measurement readouts from second hierarchical level measurement modules and the sum of measurement readouts from first hierarchical level measurement modules is larger than a measurement error threshold amount.

A discrepancy in the measurement readout of the first measurement module may be determined to be present on a condition that at least one of the following criteria is fulfilled: the measurement readout is empty, the measurement readout is lower than a latest historical measurement readout of the first measurement module, and the measurement readout is larger than the latest historical measurement readout of the first measurement module by a discrepancy threshold amount.

The method may further comprise determining the discrepancy threshold amount as a variation measure of historical measurement readouts of the first measurement module.

The discrepancy may be categorized as an anomaly if the difference between the aggregate of measurement readouts from second hierarchical level measurement modules and the sum of measurement readouts from first hierarchical level measurement modules is smaller than a measurement error threshold amount.

The method may further comprise determining the measurement error threshold amount based on specified uncertainty for the analog flow meters being monitored by the first hierarchical level measurement modules and the second hierarchical level measurement modules.

The method may further comprise: upon the discrepancy is categorized as an anomaly issuing an anomaly event; and upon the discrepancy is categorized as a measurement error, issuing a request for an updated measurement readout from the first measurement module.

The request for an updated measurement readout from the first measurement module comprises instructions for the first measurement module to perform a set of repetitive measurement readouts during a time period.

According to a second aspect a service server configured to service a plurality of measurement modules each measurement module being configured to obtain measurement readouts of analog numbers and/or analog pointers displayed by a respective analog flow meter by using computer vision is provided. The service server comprising: a communication unit configured to individually communicate with the plurality of measurement modules; and control circuitry. The control circuitry is configured to execute: a discrepancy function configured to compare a measurement readout of a first measurement module among the plurality of measurement modules with historical measurement readouts of the first measurement module thereby determining whether a discrepancy in the measurement readout of the first measurement module is present or not; and a validation function configured to, upon a discrepancy is determined to be present, categorize the discrepancy as a measurement error or an anomaly by comparing a sum of a respective measurement readout from each of a first set of measurement modules belonging to a first hierarchical level in which first set the first measurement module is a member with an aggregate of a respective measurement readout from each of a second set of measurement modules belonging to a second hierarchical level, the second hierarchical level being upstream the first hierarchical level, wherein the sum of the measurement readouts from the first set of measurement modules is substantially equal to the aggregate of measurement readouts from the second set of measurement modules if no measurement error is present, and wherein the discrepancy is categorized as a measurement error if a difference between the aggregate of measurement readouts from second hierarchical level measurement modules and the sum of measurement readouts from first hierarchical level measurement modules is larger than a measurement error threshold amount.

The above mentioned features of the first aspect, when applicable, apply to this second aspect as well. In order to avoid undue repetition, reference is made to the above.

According to a third aspect a non-transitory computer-readable storage medium is provided. The non-transitory computer-readable storage medium having stored thereon instructions for implementing the method according to the first aspect, when executed on a service server having processing capabilities.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 schematically illustrates a fluid supply line with an analog flow meter connected thereto also a measurement module retrofitted to the analog flow meter is illustrated, the measurement module being connected to a service server over a communication network.
Fig. 2 schematically illustrates the measurement module of Fig. 1 in more detail.
Fig. 3 schematically illustrates a plurality of measurement modules arranged in a hierarchical layout.
Fig. 4 schematically illustrates the service server of Fig. 1 in more detail.
Fig. 5 is a block diagram of a method for categorizing a discrepancy in a measurement readout of a flow meter.

### Detailed description

The present invention will now be described more fully hereinafter with reference to the accompanying drawings, in which currently preferred embodiments of the invention are shown. This invention may, however, be embodied in many different forms.

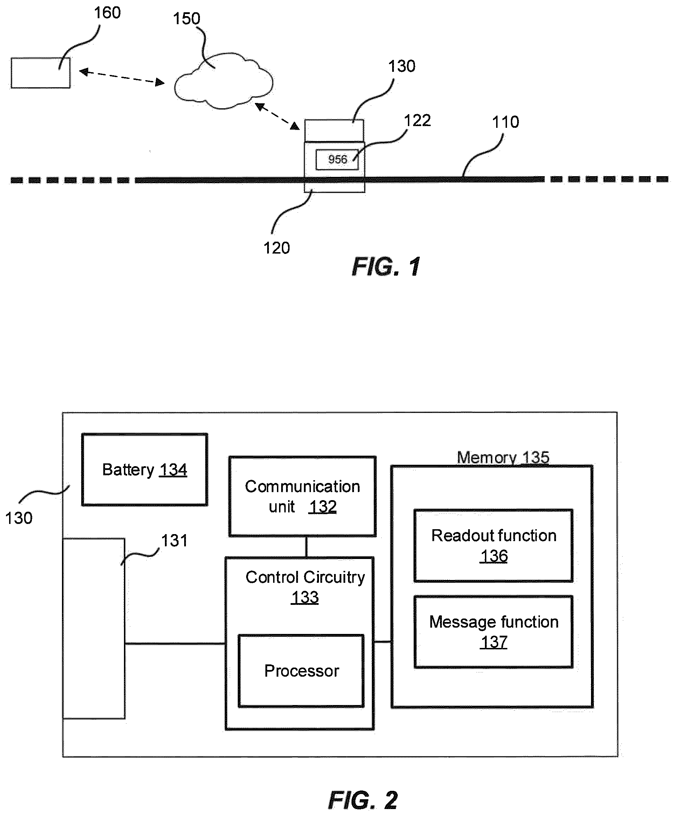

Fig. 1 illustrates a fluid supply line 110 with an analog flow meter 120 connected thereto. The analog flow meter 120 is configured to measure an amount of fluid flowing through the flow meter 120. That is, it can be said that the analog flow meter 120 is configured to measure an amount of fluid consumed. The analog flow meter 120 may e.g. be configured to measure a flow of water/gas flowing through a water/gas supply line. An accumulated value of the flow of fluid flowing through the supply line 110 may be displayed with analog numbers and/or analog pointers. The analog flow meter 120 typically mechanically measures a flow of fluid in the supply line 110 and display the accumulated value of the flow of fluid flowing through the supply line 110 using analog number and/or analog pointers displayed on an analog display 122 of the analog flow meter 120. The analog flow meter 120 is typically not connected to a communication network and hence a readout of the accumulated flow measured by the analog flow meter 120 must be made manually.

In order to provide the ability to perform remote readout of the accumulated flow measured by the analog flow meter 120 a measurement module 130 is retrofitted to the analog flow meter 120. The measurement module 130 is disclosed in more detail in connection with Fig. 2. The measurement module 130 comprises a digital camera unit 131, a communication unit 132, a control circuitry 133 and a battery 134.

The measurement module 130 is retrofitted to the analog flow meter 120 such that the digital camera unit 131 is configured to capture images of the analog numbers and/or analog pointers displayed by the analog display 122 of the analog flow meter 120. Hence, the digital camera unit 131 is configured to capture images of the analog numbers and/or analog pointers displayed by the analog flow meter 120. The digital camera unit 131 may e.g. be a digital camera unit adopted for mobile electronic devices such as mobile phones, laptops, etc.

The communication unit 132 is configured to connect the measurement module 130 to a communication network 150, such as the Internet. Preferably, the communication unit 132 is a wireless communication unit set to communicate using one or more wireless communication protocols, such as Wi-Fi, LoRa, NB-loT, DASH7, and 2G-5G. This list of wireless communication protocols is not exhaustive, on the contrary any other present or future wireless communication protocol can be used. For some embodiments the communication unit 132 may alternatively or in combination be set to have a wired connection to the communication network. Particularly, the communication unit 132 is configured to communicate with a service server 160.

The control circuitry 133 is configured to carry out overall control of functions and operations of the measurement module 130. The control circuitry 133 may include a processor, such as a central processing unit (CPU), microcontroller, or microprocessor. The processor is configured to execute program code stored in a memory 135, in order to carry out functions and operations of measurement module 130.

The memory 135 may be one or more of a buffer, a flash memory, a hard drive, a removable medium, a volatile memory, a non-volatile memory, a random access memory (RAM), or another suitable device. In a typical arrangement, the memory 135 may include a non-volatile memory for long term data storage and a volatile memory that functions as system memory for the control circuitry 133. The memory 135 may exchange data with the control circuitry 133 over a data bus. Accompanying control lines and an address bus between the memory 135 and the control circuitry 133 also may be present.

Functions and operations of the measurement module 130 may be embodied in the form of executable logic routines (e.g., lines of code, software programs, etc.) that are stored on a non-transitory computer readable medium (e.g., the memory 135) of the measurement module 130 and are executed by the control circuitry 133 (e.g., using the processor). Furthermore, functions and operations of the measurement module 130 may be stand-alone software applications or form a part of a software application that carries out additional tasks related to the measurement module 130. The described functions and operations may be considered a method that the corresponding part of the measurement module 130 is configured to carry out. Also, while the described functions and operations may be implemented in software, such functionality may as well be carried out via dedicated hardware or firmware, or some combination of hardware, firmware and/or software.

The control circuitry 133 is configured to execute a readout function 136. The readout function 136 is configured to obtain a measurement readout of the analog numbers and/or analog pointers displayed by the analog flow meter 120. This by analyzing an image captured by the digital camera unit 131. Hence, the readout function 136 is configured perform an image analysis in order to extract text/digit information from image data in the images captured by the digital camera unit 131 indicative of the analog numbers and/or analog pointers displayed by the analog flow meter 120. The text/digit information being represented as digital information in the measurement readout. In summary, the measurement module 130 is configured to obtain a measurement readout of the analog numbers and/or analog pointers displayed by the analog flow meter 120 by using computer vision.

The control circuitry 133 may be configured to execute the readout function 136 in order to obtain measurement readouts to be reported to the service server 160 with a certain rate, e.g., .every 1, 6, 12, 24, 48 hours. The rate may be preconfigured and stored in the measurement module 130. Alternatively, the reporting rate may be received in a connection setup procedure with the service server 160.

The control circuitry 133 is further configured to execute a message function 137. The message function 137 is configured to, via the communication unit 132, communicate the measurement readout to the service server 160.

Hence, in order to be able to perform remote readouts of an analog flow meter 120 a measurement module 130 disclosed herein can be retrofitted thereto. The measurement module 130 is set to capture images of the analog numbers and/or analog pointers displayed by the analog flow meter 120 and then analyze the images in order to extract the analog numbers and/or analog pointers from the images. The extracted analog numbers and/or analog pointers may thereafter be transmitted to a service server. Retrofitting a measurement module as disclosed herein on an analog flow meter 120 can be made easily without expertise knowledge. The measurement module 130 is typically powered by a battery 134 in order to reduce the complexity of the installation even further.

The aim is to have a battery lifetime of at least 10 years in the measurement module 130. The communication unit 132 is typically consuming more power than the control circuitry 133, hence a good trade-off is to have the control circuitry 133 to perform analyzing of the images in order to extract the analog numbers and/or analog pointers from the images and the transmit the extract the analog numbers and/or analog pointers as digital information instead of transmitting the full images for analyzing at the service server 160. The measurement module 130 may be set to report new readouts every day or every week.

However, image analyzing made by the readout function 136 is not error free. Due to various reasons, such as condense on the glass, debris, insects, image analyzing flaws, etc. Hence, the measurement readout reported to the service server 160 may contain error. Discrepancy from expected measurement readout may be detected at the service server 160. A discrepancy may be indicative of that a high amount of consumed water/gas since last measurement readout. This may indicate a leakage (or similar), however a discrepancy may alternatively be an error in the readout. In order to overcome such erroneous measurement readouts the measurement module 130 may be configured to transmit measurement readout on a frequent basis, e.g. once every minute. However this will significantly reduce the lifetime of the battery.

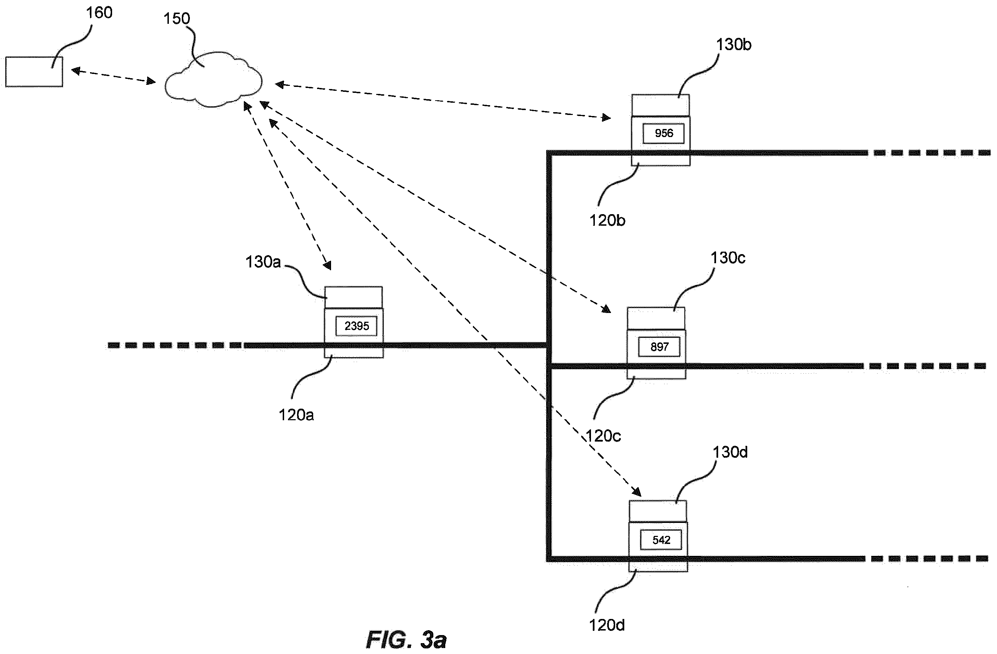

Water and gas grids are typically built in a hierarchical manner. That is, at a first hierarchical level there are flow meters measuring the water/gas consumption in, say a house or an apartment. On a second hierarchical level flow meters are measuring the combined consumption in a group of houses or a building etc. Of course the hierarchical structure may have even more levels. An example of a hierarchical layout of analog flow meters 120a, 120b, 120c, 120d with a respective measurement module 130a, 130b, 130c, 130d fitted thereto are schematically illustrated in Fig. 3. The different measurement modules 130a, 130b, 130c, 130d are configured to communicate with the service server 160. The service server 160 is set to have knowledge of where in the hierarchical layout the different measurement modules 130a, 130b, 130c, 130d are located. The service server 160 and a plurality of measurement modules 130a, 130b, 130c, 130d arranged in the hierarchical layout constitutes a flow monitoring system. Hence, the plurality of measurement modules 130a, 130b, 130c, 130d is arranged in a hierarchical structure with a first set of measurement modules 130b, 130c, 130d located at a first hierarchical level and a second set of measurement modules 130a located at a second hierarchical level. The second hierarchical level being upstream the first hierarchical level. More precisely, the second hierarchical level being directly upstream the first hierarchical level. By upstream is herein meant in the opposite direction from a flow direction in which the fluid flowing in the supply line 110, i.e. nearer to a source (e.g. a water tower or gas source) of the fluid. The first hierarchical level comprises a plurality of measurement modules 130b, 130c, 130d. The second hierarchical level comprises one or more measurement modules 130a. In the in Fig. 3 illustrated hierarchical structure the second hierarchical level comprises one single measurement module 130a. But it is to be understood that more than one measurement module may be present at the second hierarchical level.

The present invention is based on the insight made by the inventors that measurement readouts from measurement modules 130a, 130b, 130c, 130d throughout such a hierarchical structure together with knowledge of the topography of the hierarchical structure can be used in order to validate discrepancy in a measurement readout from a specific one of the measurement modules. Hence, validating whether a discrepancy in a measurements readout from one of the measurement modules is an indication of an anomaly, e.g. a leak, or a measurement error may be made using knowledge of the topography of the hierarchical layout and measurement readouts from a plurality of measurement modules. Put differently, based on comparison of accumulated flow of fluid on various hierarchical levels it may be determined, preferably at the service server 160, whether a received measurement readout from a specific measurement module, indicating a discrepancy in consumption, is either an anomaly or a measurement error.

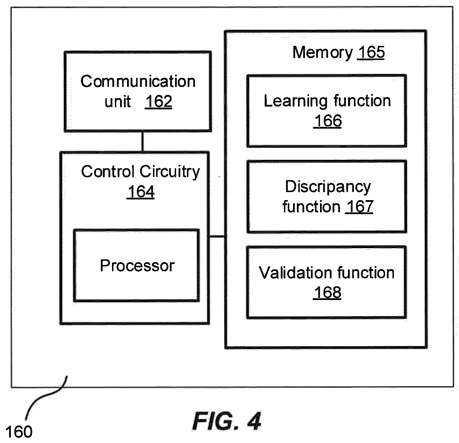

In connection with Fig. 4 the service server 160 will be discussed in more detail. The service server 160 is configured to communicate with a plurality of measurement modules 130 arranged in the hierarchical layout. The service server 160 comprises a communication unit 162 and control circuitry 164.

The communication unit 162 is configured to individually communicate with the plurality of measurement modules 130. The communication unit 162 is configured to connect the service server 160 to the communication network 150, such as the Internet. The communication unit 162 may be any type of communication unit 162 configured to be connected by wired or be wirelessly connected to the communication network 150.

The control circuitry 164 is configured to carry out overall control of functions and operations of the service server 160. The control circuitry 164 may include a processor, such as a central processing unit (CPU), microcontroller, or microprocessor. The processor is configured to execute program code stored in a memory 165, in order to carry out functions and operations of service server 160.

The memory 165 may be one or more of a buffer, a flash memory, a hard drive, a removable medium, a volatile memory, a non-volatile memory, a random access memory (RAM), or another suitable device. In a typical arrangement, the memory 165 may include a non-volatile memory for long term data storage and a volatile memory that functions as system memory for the control circuitry 164. The memory 165 may exchange data with the control circuitry 164 over a data bus. Accompanying control lines and an address bus between the memory 165 and the control circuitry 164 also may be present.

Functions and operations of the service server 160 may be embodied in the form of executable logic routines (e.g., lines of code, software programs, etc.) that are stored on a non-transitory computer readable medium (e.g., the memory 165) of the service server 160 and are executed by the control circuitry 164 (e.g., using the processor). Furthermore, functions and operations of the service server 160 may be stand-alone software applications or form a part of a software application that carries out additional tasks related to the service server 160. The described functions and operations may be considered a method that the corresponding part of the service server 160 is configured to carry out. Also, while the described functions and operations may be implemented in software, such functionality may as well be carried out via dedicated hardware or firmware, or some combination of hardware, firmware and/or software.

The control circuitry 164 may be configured to execute a learning function 166. The learning function 166 is configured to, from historical data, learn a behavior of consumed fluid during various time periods as monitored by a specific measurement module 130. From the historical data information, such as average and standard deviation, extreme max, extreme min of consumed fluid during a time period may been learned. The consumption behavior may be time dependent over a day, week or month or season, but estimated based on for instance statistical methods well known in the art. For example machine learning may be used for the learning. Hence, from the historical data discrepancy thresholds for indicating discrepancy can be determined. Such discrepancy thresholds for indicating discrepancy may be time dependent. For example a discrepancy threshold for a specific measurement module may be a variation measure of historical measurement readouts of the specific measurement module.

The control circuitry 164 is configured to execute a discrepancy function 167. The discrepancy function 167 configured to analyze a specific measurement readout received from a specific measurement module 130 to check for discrepancy. The discrepancy function 167 may be configured to, based on a comparison with learned behavior, detect an indicative discrepancy of the consumption. This for example if the consumption passes the determined threshold for indicating discrepancy. For instance, the consumption may be significantly higher than the threshold for indicating discrepancy since the last received measurement. This may be due to a leakage or a measurement error at the specific measurement module. The specific measurement readout may also be indicative of being lower than historical data, indicating either a problem with flow direction or a measurement error at the specific measurement module. Accordingly, the discrepancy function 167 may be set to analyze, the specific measurement readout to check for discrepancy by comparing the specific measurement readout with historical data from the specific measurement module 130. Alternatively, or in combination, the discrepancy function 167 may be set to identify discrepancy if the specific measurement readout received from the specific measurement module 130 is empty. Hence, the discrepancy function 167 may be configured to identify discrepancy upon at least one of the following criteria is fulfilled: the specific measurement readout is empty, the specific measurement readout is lower than a latest historical measurement readout of the specific measurement module, and the specific measurement readout is larger than the latest historical measurement readout of the specific measurement module by the discrepancy threshold amount determined for that specific measurement module.

Upon the specific measurement readout is indicative of that a discrepancy is not present no action for validating the measurement readout is needed and a new measurement readout from the specific measurement module will be waited for to be reported in the future.

However, upon the specific measurement readout is indicative of a discrepancy, the discrepancy function 167 is configured to call on a validation function 168. The validation function 168 is executed by the control circuitry 164. The validation function 168 is configured to compare the specific measurement readout of the specific measurement module and measurement readouts of other measurement modules on a same hierarchical level as the specific measurement module with a measurement readout of a measurement module on a hierarchical level being upstream, preferably directly upstream, the hierarchical level the specific measurement module belongs to. Accordingly, the validation function 168 is configured to compare the measurement readouts for all measurement modules on a first hierarchical level with measurement readouts of the measurement modules on a second hierarchical level, the second hierarchical level is upstream, preferably directly upstream, the first hierarchical level. It goes without saying that it is the most recent measurement readouts that are to be used. Looking at Fig. 3, let us consider the measurement module 130b to be the specific measurement module for which a discrepancy is detected, then the measurement modules 130b, 130c, 130d constitutes a first set of measurement modules being located at the first hierarchical level and the measurement module 130a constitutes a second set of measurement modules being located at the second hierarchical level. By comparing a sum of measurement readouts from the first set of measurement modules 130b, 130c, 130d and an aggregate of measurement readouts from the second set of measurement modules 130a. Sometimes, as in the in Fig. 3 illustrated example, the aggregate of measurement readouts from the second set of measurement modules 130a is just a single measurement readouts from a single measurement module 130a. Alternatively, the aggregate of measurement readouts from the second set of measurement modules 130a is a summation of a plurality of measurement readouts from a plurality of measurement modules 130a being present at the second hierarchical level. By such comparison it can be determined whether the discrepancy indicates a measurement error or an anomaly.

If no measurement error is present the sum of the measurement readouts from the first set of measurement modules should be substantially equal to the aggregate of measurement readouts from the second set of measurement modules. Hence, in the situation in Fig. 3, the sum of the measurement readouts from the measurement modules 130b, 130c, 130d should be substantially equal to the measurement readout from the measurement module 130a. Hence, a measurement error may be determined to be present if a difference between the one or more measurement readouts of the one or more measurement modules of the second hierarchical level and a sum of the plurality of measurement readouts of the plurality of measurement modules of the first hierarchical level is larger than a measurement error threshold amount. The measurement error threshold amount may be determined based on specified uncertainty for the analog flow meters 120 involved. Typically an analog flow meter has a tolerance of 0.1-5%.

Further, an anomaly, e.g. a leak, may be determined to be present if the difference between the one or more measurement readouts of the one or more measurement modules of the second hierarchical level and the sum of the plurality of measurement readouts of the plurality of measurement modules of the first hierarchical level is smaller than the measurement error threshold amount. This since if the above discussed difference is smaller than the measurement error threshold amount the readout can be trusted and is instead an indication of that the discrepancy is indicative of an anomaly, e.g. a leak.

Upon a measurement error is determined, the validation function 168 is configured to issue a request for an updated specific measurement readout from the specific measurement module. The request for an updated specific measurement readout from the specific measurement module may comprise instructions for the specific measurement module to perform a set of repetitive measurement readouts during a time period. The instructions for the specific measurement module to perform a set of repetitive measurement readouts during a time period may for example be report a measurement readout every 10 minutes for 60 minutes, report a measurement readout every 30 minutes, for 24 hours etc. The instructions may further contain information on how the measurement module should process the set of measurements, such as a function the module should use for validating the new set of repetitive measurement readouts. The function may be based on the learned behavior of the water/gas consumption. Also, a parameter associated to a function, dependent on the learned behavior may be transmitted to the module. The function and/or parameter may be determined based on a type/model/version of the specific measurement module. Different types/models/versions of measurement modules may have different software/hardware capabilities and the functions/parameters the measurement module can execute may be software/hardware dependent.

Upon anomaly is determined, the validation function 168 is configured to issue an anomaly event. Depending on type of anomaly detected various anomaly events may be issued. Hence, if the specific measurement readout is indicative of that the consumption is significantly higher than the threshold for indicating discrepancy an anomaly in the form of a leak is most probably present and a leakage event may be issued. The specific measurement readout may also be indicative of being lower than historical data, indicating a problem with flow direction and a backdraft event may be issued..

The validation function 168 may be configured to send the anomaly event to a maintenance unit, or to an "app" in a smartphone, for responsible maintenance officer etc.

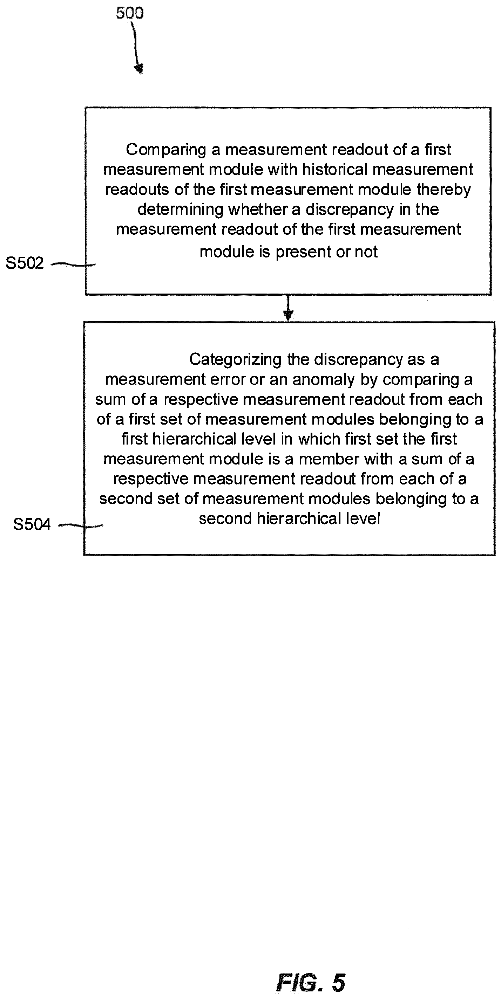

In connection with Fig. 5 a method 500 for categorizing a discrepancy in a measurement readout from an analog flow meter 120. The measurement readout being performed by a first measurement module 130b configured to obtain measurement readouts of analog numbers and/or analog pointers displayed by an analog flow meter 120b by using computer vision will be discussed. The method 500 comprises the following steps. The steps may be performed in any suitable order.

Comparing S502 the measurement readout of the first measurement module 130b with historical measurement readouts of the first measurement module 130b thereby determining whether a discrepancy in the measurement readout of the first measurement module is present or not. A discrepancy in the measurement readout of the first measurement module 130b may be determined to be present on a condition that at least one of the following criteria is fulfilled: the measurement readout is empty, the measurement readout is lower than a latest historical measurement readout of the first measurement module 130b, and the measurement readout is larger than the latest historical measurement readout of the first measurement module 130b by a discrepancy threshold amount. The discrepancy threshold amount may be determined as a variation measure of historical measurement readouts of the first measurement module 130b. This is discussed in more detail above in connection with the service server, in order to avoid undue repetition reference is made to the above discussion.

Upon a discrepancy in the measurement readout of the first measurement module 130b is present, the method further comprises categorizing S504 the discrepancy as a measurement error or an anomaly. This by comparing a sum of a respective measurement readout from each of a first set of measurement modules 130b, 130c, 130d belonging to a first hierarchical level in which first set the first measurement module 130b is a member with an aggregate of a respective measurement readout from each of a second set of measurement modules 130a belonging to a second hierarchical level. The second hierarchical level being upstream, preferably directly upstream, the first hierarchical level. This is discussed in more detail above in connection with the service server, in order to avoid undue repetition reference is made to the above discussion.

The first set of measurement modules comprise a plurality of measurement modules. The second set of measurement modules comprises one or more measurement module. Especially, it is understood that the second set of measurement modules may be just one single measurement module. This is discussed in more detail above in connection with the service server, in order to avoid undue repetition reference is made to the above discussion.

The discrepancy may be categorized as a measurement error if a difference between the aggregate of measurement readouts from second hierarchical level measurement modules 130a and the sum of measurement readouts from first hierarchical level measurement modules 130b, 130c, 130d is larger than a measurement error threshold amount. This is discussed in more detail above in connection with the service server, in order to avoid undue repetition reference is made to the above discussion.

The discrepancy may be categorized as an anomaly if the difference between the sum of measurement readouts from second hierarchical level measurement modules 130a and the sum of measurement readouts from first hierarchical level measurement modules 130b, 130c, 130d is smaller than a measurement error threshold amount. This is discussed in more detail above in connection with the service server, in order to avoid undue repetition reference is made to the above discussion.

Determining of the measurement error threshold amount may be based on specified uncertainty for the analog flow meters 120a, 120b, 120c, 120d being monitored by the first hierarchical level measurement modules 130b, 130c, 130d and the second hierarchical level measurement modules 130a. This is discussed in more detail above in connection with the service server, in order to avoid undue repetition reference is made to the above discussion.

The method may further comprise: upon the discrepancy is categorized as an anomaly issuing an anomaly event; and upon the discrepancy is categorized as a measurement error, issuing a request for an updated measurement readout from the first measurement module.

The request for an updated measurement readout from the first measurement module comprises instructions for the first measurement module to perform a set of repetitive measurement readouts during a time period.

A low complexity method for discrepancy classification in readouts from a flow meter is hereby achieved. The discrepancy classification is fast and robust. Moreover, by reducing the number of new measurements needed to be done by the measurement modules increased battery lifetime for the measurement modules may be achieved.

The person skilled in the art realizes that the present invention by no means is limited to what is explicitly described above. On the contrary, many modifications and variations are possible within the scope of the appended claims.

For example, the service server 160 may be configured to instruct measurement modules 130 to perform measurement readouts with a specific periodicity, e.g. every 1, 6, 12, 24, 48 hours. The service server 160 may be configured to set the measurement modules 130 to report at different times or at a same time.

Above, readouts from analog fluid flow meters have been discussed. It is however, understood that also other types of analog flow meters can be monitored using the measurement module 130 and service server 160 discussed above. One such example is an analog electricity meter.

Additionally, variations can be understood and effected by the skilled person in practicing the claimed invention, from a study of the drawings, the disclosure, and the appended claims.

## Claims

1. A method for categorizing a discrepancy in a measurement readout from a first measurement module (130b) configured to obtain measurement readouts of analog numbers and/or analog pointers displayed by an analog flow meter (120b) by using computer vision, the method comprising:
comparing the measurement readout of the first measurement module (130b) with historical measurement readouts of the first measurement module (130b) thereby determining whether a discrepancy in the measurement readout of the first measurement module is present or not; and
upon a discrepancy in the measurement readout of the first measurement module (130b) is present, categorizing the discrepancy as a measurement error or an anomaly by comparing a sum of a respective measurement readout from each of a first set of measurement modules (130b, 130c, 130d) belonging to a first hierarchical level in which first set the first measurement module (130b) is a member with an aggregate of a respective measurement readout from each of a second set of measurement modules (130a) belonging to a second hierarchical level, the second hierarchical level being upstream the first hierarchical level, wherein the sum of the measurement readouts from the first set of measurement modules (130b, 130c, 130d) is substantially equal to the aggregate of measurement readouts from the second set of measurement modules (130a) if no measurement error is present, and wherein the discrepancy is categorized as a measurement error if a difference between the aggregate of measurement readouts from second hierarchical level measurement modules (130a) and the sum of measurement readouts from first hierarchical level measurement modules (130b, 130c, 130d) is larger than a measurement error threshold amount.

2. The method according to claim 1, wherein a discrepancy in the measurement readout of the first measurement module (130b) is determined to be present on a condition that at least one of the following criteria is fulfilled:
the measurement readout is empty,
the measurement readout is lower than a latest historical measurement readout of the first measurement module (130b), and
the measurement readout is larger than the latest historical measurement readout of the first measurement module (130b) by a discrepancy threshold amount.

3. The method according to claim 1 or 2, further comprising determining the discrepancy threshold amount as a variation measure of historical measurement readouts of the first measurement module (130b).

4. The method according to any one of claims 1-3, wherein the discrepancy is categorized as an anomaly if the difference between the aggregate of measurement readouts from second hierarchical level measurement modules (130a) and the sum of measurement readouts from first hierarchical level measurement modules (130b, 130c, 130d) is smaller than a measurement error threshold amount.

5. The method according to any one of claims 1-4, further comprising determining the measurement error threshold amount based on specified uncertainty for the analog flow meters (120a, 120b, 120c, 120d) being monitored by the first hierarchical level measurement modules (130b, 130c, 130d) and the second hierarchical level measurement modules (130a).

6. The method according to any one of claims 1-5, further comprising:
upon the discrepancy is categorized as an anomaly issuing an anomaly event; and
upon the discrepancy is categorized as a measurement error, issuing a request for an updated measurement readout from the first measurement module (130b).

7. The method according to 6, wherein the request for an updated measurement readout from the first measurement module comprises instructions for the first measurement module to perform a set of repetitive measurement readouts during a time period.

8. A service server (160) configured to service a plurality of measurement modules (130a, 130b, 130c, 130d) each measurement module (130a, 130b, 130c, 130d) being configured to obtain measurement readouts of analog numbers and/or analog pointers displayed by a respective analog flow meter (120a, 120b, 120c, 120d) by using computer vision, the service server (160) comprising:
a communication unit (162) configured to individually communicate with the plurality of measurement modules (130a, 130b, 130c, 130d); and
control circuitry (164) configured to execute:
a discrepancy function (167) configured to compare a measurement readout of a first measurement module (130b) among the plurality of measurement modules (130a, 130b, 130c, 130d) with historical measurement readouts of the first measurement module (130b) thereby determining whether a discrepancy in the measurement readout of the first measurement module (130b) is present or not; and
a validation function (168) configured to, upon a discrepancy is determined to be present, categorize the discrepancy as a measurement error or an anomaly by comparing a sum of a respective measurement readout from each of a first set of measurement modules (130b, 130c, 130d) belonging to a first hierarchical level in which first set the first measurement module (130b) is a member with an aggregate of a respective measurement readout from each of a second set of measurement modules (130a) belonging to a second hierarchical level, the second hierarchical level being upstream the first hierarchical level, wherein the sum of the measurement readouts from the first set of measurement modules (130b, 130c, 130d) is substantially equal to the aggregate of measurement readouts from the second set of measurement modules (130a) if no measurement error is present, and wherein the discrepancy is categorized as a measurement error if a difference between the aggregate of measurement readouts from second hierarchical level measurement modules (130a) and the sum of measurement readouts from first hierarchical level measurement modules (130b, 130c, 130d) is larger than a measurement error threshold amount.

9. A non-transitory computer-readable storage medium having stored thereon instructions for implementing the method according to any one of claims 1-7, when executed on a service server having processing capabilities according to claim 8.

## Patentansprüche

1. Verfahren zur Kategorisierung einer Diskrepanz bei einer Messauslesung von einem ersten Messmodul (130b), das dazu konfiguriert ist, Messauslesungen von analogen Zahlen und/oder analogen Zeigern, die von einem analogen Durchflussmesser (120b) angezeigt werden, durch Verwenden von Computervision zu beziehen, wobei das Verfahren umfasst:
Vergleichen der Messauslesung des ersten Messmoduls (130b) mit historischen Messauslesungen des ersten Messmoduls (130b), wodurch bestimmt wird, ob eine Diskrepanz bei der Messauslesung des ersten Messmoduls vorliegt oder nicht; und
wenn eine Diskrepanz bei der Messauslesung des ersten Messmoduls (130b) vorliegt, Kategorisieren der Diskrepanz als einen Messfehler oder eine Anomalie durch Vergleichen einer Summe einer jeweiligen Messauslesung von jedem von einem ersten Satz von Messmodulen (130b, 130c, 130d), der zu einer ersten Hierarchiestufe gehört, wobei das erste Messmodul (130b) ein Mitglied dieses ersten Satzes ist, mit einem Aggregat einer jeweiligen Messauslesung von jedem von einem zweiten Satz von Messmodulen (130a), der zu einer zweiten Hierarchiestufe gehört, wobei die zweite Hierarchiestufe der ersten Hierarchiestufe vorgelagert ist, wobei die Summe der Messauslesungen von dem ersten Satz von Messmodulen (130b, 130c, 130d) im Wesentlichen gleich dem Aggregat von Messauslesungen von dem zweiten Satz von Messmodulen (130a) ist, wenn kein Messfehler vorliegt, und wobei die Diskrepanz als ein Messfehler kategorisiert wird, wenn eine Differenz zwischen dem Aggregat von Messauslesungen von Messmodulen (130a) der zweiten Hierarchiestufe und der Summe von Messauslesungen von Messmodulen (130b, 130c, 130d) der ersten Hierarchiestufe größer als ein Messfehlerschwellenbetrag ist.

2. Verfahren nach Anspruch 1, wobei unter einer Bedingung, dass mindestens eines der folgenden Kriterien erfüllt ist, von einer Diskrepanz bei der Messauslesung des ersten Messmoduls (130b) bestimmt wird, dass sie vorliegt:
die Messauslesung ist leer,
die Messauslesung ist niedriger als eine neueste historische Messauslesung des ersten Messmoduls (130b), und
die Messauslesung ist um einen Diskrepanzschwellenbetrag höher als die neueste historische Messauslesung des ersten Messmoduls (130b).

3. Verfahren nach Anspruch 1 oder 2, ferner umfassend ein Bestimmen des Diskrepanzschwellenbetrags als ein Streumaß von historischen Messauslesungen des ersten Messmoduls (130b).

4. Verfahren nach einem der Ansprüche 1-3, wobei die Diskrepanz als eine Anomalie kategorisiert wird, wenn die Differenz zwischen dem Aggregat von Messauslesungen von Messmodulen (130a) der zweiten Hierarchiestufe und der Summe von Messauslesungen von Messmodulen (130b, 130c, 130d) der ersten Hierarchiestufe kleiner als ein Messfehlerschwellenbetrag ist.

5. Verfahren nach einem der Ansprüche 1-4, ferner umfassend ein Bestimmen des Messfehlerschwellenbetrags auf der Basis einer spezifizierten Unsicherheit für die analogen Durchflussmesser (120a, 120b, 120c, 120d), die von den Messmodulen (130b, 130c, 130d) der ersten Hierarchiestufe und den Messmodulen (130a) der zweiten Hierarchiestufe überwacht werden.

6. Verfahren nach einem der Ansprüche 1-5, ferner umfassend:
wenn die Diskrepanz als eine Anomalie kategorisiert wird, Ausgeben eines Anomalie-Ereignisses; und
wenn die Diskrepanz als ein Messfehler kategorisiert wird, Ausgeben einer Anforderung einer aktualisierten Messauslesung von dem ersten Messmodul (130b).

7. Verfahren nach Anspruch 6, wobei die Anforderung einer aktualisierten Messauslesung von dem ersten Messmodul Anweisungen für das erste Messmodul umfasst, einen Satz von wiederholten Messauslesungen während eines Zeitraums durchzuführen.

8. Dienstserver (160), der dazu konfiguriert ist, eine Vielzahl von Messmodulen (130a, 130b, 130c, 130d) zu pflegen, wobei jedes Messmodul (130a, 130b, 130c, 130d) dazu konfiguriert ist, Messauslesungen von analogen Zahlen und/oder analogen Zeigern, die von einem jeweiligen analogen Durchflussmesser (120a, 120b, 120c, 120d) angezeigt werden, durch Verwenden von Computervision zu beziehen, wobei der Dienstserver (160) umfasst:
eine Kommunikationseinheit (162), die dazu konfiguriert ist, einzeln mit der Vielzahl von Messmodulen (130a, 130b, 130c, 130d) zu kommunizieren; und
Steuerschaltkreise (164), die konfiguriert sind zum Ausführen von:
einer Diskrepanzfunktion (167), die dazu konfiguriert ist, eine Messauslesung eines ersten Messmoduls (130b) von der Vielzahl von Messmodulen (130a, 130b, 130c, 130d) mit historischen Messauslesungen des ersten Messmoduls (130b) zu vergleichen, wodurch bestimmt wird, ob eine Diskrepanz bei der Messauslesung des ersten Messmoduls (130b) vorliegt oder nicht; und
einer Validierungsfunktion (168), die dazu konfiguriert ist, wenn bestimmt wird, dass eine Diskrepanz vorliegt, die Diskrepanz als einen Messfehler oder eine Anomalie durch Vergleichen einer Summe einer jeweiligen Messauslesung von jedem von einem ersten Satz von Messmodulen (130b, 130c, 130d), der zu einer ersten Hierarchiestufe gehört, wobei das erste Messmodul (130b) ein Mitglied dieses ersten Satzes ist, mit einem Aggregat einer jeweiligen Messauslesung von jedem von einem zweiten Satz von Messmodulen (130a), der zu einer zweiten Hierarchiestufe gehört, zu kategorisieren, wobei die zweite Hierarchiestufe der ersten Hierarchiestufe vorgelagert ist, wobei die Summe der Messauslesungen von dem ersten Satz von Messmodulen (130b, 130c, 130d) im Wesentlichen gleich dem Aggregat von Messauslesungen von dem zweiten Satz von Messmodulen (130a) ist, wenn kein Messfehler vorliegt, und wobei die Diskrepanz als ein Messfehler kategorisiert wird, wenn eine Differenz zwischen dem Aggregat von Messauslesungen von Messmodulen (130a) der zweiten Hierarchiestufe und der Summe von Messauslesungen von Messmodulen (130b, 130c, 130d) der ersten Hierarchiestufe größer als ein Messfehlerschwellenbetrag ist.

9. Nichtflüchtiges computerlesbares Speichermedium, das Anweisungen zum Implementieren des Verfahrens nach einem der Ansprüche 1-7 darauf gespeichert aufweist, wenn sie auf einem Dienstserver mit Verarbeitungskapazitäten nach Anspruch 8 ausgeführt werden.

## Revendications

1. Procédé de catégorisation d'une divergence dans un relevé de mesure provenant d'un premier module de mesure (130b) configuré pour obtenir des relevés de mesure de nombres analogiques et/ou de pointeurs analogiques affichés par un débitmètre analogique (120b) en utilisant une vision par ordinateur, le procédé comprenant :
la comparaison du relevé de mesure du premier module de mesure (130b) aux relevés de mesure historiques du premier module de mesure (130b), déterminant ainsi si une divergence est présente ou non dans le relevé de mesure du premier module de mesure ; et
lorsqu'une divergence dans le relevé de mesure du premier module de mesure (130b) est présente, la catégorisation de la divergence comme une erreur de mesure ou une anomalie en comparant la somme des relevés de mesure respectifs provenant de chaque module d'un premier ensemble de modules de mesure (130b, 130c, 130d) appartenant à un premier niveau hiérarchique, où le premier module de mesure (130b) est un membre du premier ensemble, à un agrégat d'un relevé de mesure respectif provenant de chaque module d'un deuxième ensemble de modules de mesure (130a) appartenant à un deuxième niveau hiérarchique, le deuxième niveau hiérarchique étant en amont du premier niveau hiérarchique, dans lequel la somme des relevés de mesure provenant du premier ensemble de modules de mesure (130b, 130c, 130d) est substantiellement égale à l'agrégat des relevés de mesure provenant du deuxième ensemble de modules de mesure (130a) si aucune erreur de mesure n'est présente, et dans lequel la divergence est catégorisée comme une erreur de mesure si la différence entre l'agrégat des relevés de mesure provenant des modules de mesure de deuxième niveau hiérarchique (130a) et la somme des relevés de mesure provenant des modules de mesure de premier niveau hiérarchique (130b, 130c, 130d) est supérieure à une valeur seuil d'erreur de mesure.

2. Procédé selon la revendication 1, dans lequel une divergence dans le relevé de mesure du premier module de mesure (130b) est déterminée comme étant présente sous la condition qu'au moins l'un des critères suivants soit satisfait :
le relevé de mesure est vide,
le relevé de mesure est inférieur au dernier relevé de mesure historique du premier module de mesure (130b), et
le relevé de mesure est supérieur d'une valeur seuil de divergence au dernier relevé de mesure historique du premier module de mesure (130b).

3. Procédé selon la revendication 1 ou 2, comprenant en outre la détermination de la valeur seuil de divergence comme une mesure de variation des relevés de mesure historiques du premier module de mesure (130b).

4. Procédé selon l'une quelconque des revendications 1 à 3, dans lequel la divergence est catégorisée comme une anomalie si la différence entre l'agrégat des relevés de mesure provenant des modules de mesure de deuxième niveau hiérarchique (130a) et la somme des relevés de mesure provenant des modules de mesure de premier niveau hiérarchique (130b, 130c, 130d) est inférieure à une valeur seuil d'erreur de mesure.

5. Procédé selon l'une quelconque des revendications 1 à 4, comprenant en outre la détermination de la valeur seuil d'erreur de mesure sur la base de l'incertitude spécifiée pour les débitmètres analogiques (120a, 120b, 120c, 120d) surveillés par les modules de mesure de premier niveau hiérarchique (130b, 130c, 130d) et les modules de mesure de deuxième niveau hiérarchique (130a).

6. Procédé selon l'une quelconque des revendications 1 à 5, comprenant en outre :
lorsque la divergence est catégorisée comme une anomalie, l'émission d'un événement d'anomalie ; et
lorsque la divergence est catégorisée comme une erreur de mesure, l'émission d'une demande pour un relevé de mesure mis à jour provenant du premier module de mesure (130b).

7. Procédé selon la revendication 6, dans lequel la demande pour un relevé de mesure mis à jour provenant du premier module de mesure comprend des instructions pour que le premier module de mesure effectue une série de relevés de mesure répétitifs sur une période.

8. Serveur de service (160) configuré pour assurer le service d'une pluralité de modules de mesure (130a, 130b, 130c, 130d), chaque module de mesure (130a, 130b, 130c, 130d) étant configuré pour obtenir des relevés de mesure de nombres analogiques et/ou de pointeurs analogiques affichés par un débitmètre analogique respectif (120a, 120b, 120c, 120d) en utilisant une vision par ordinateur, le serveur de service (160) comprenant :
une unité de communication (162) configurée pour communiquer individuellement avec la pluralité de modules de mesure (130a, 130b, 130c, 130d) ; et
une circuiterie de commande (164) configurée pour exécuter :
une fonction de divergence (167) configurée pour comparer un relevé de mesure d'un premier module de mesure (130b) parmi la pluralité de modules de mesure (130a, 130b, 130c, 130d) à des relevés de mesure historiques du premier module de mesure (130b), déterminant ainsi si une divergence est présente ou non dans le relevé de mesure du premier module de mesure (130b) ; et
une fonction de validation (168) configurée pour, lorsqu'une divergence est déterminée comme étant présente, catégoriser la divergence comme une erreur de mesure ou une anomalie en comparant la somme des relevés de mesure respectifs provenant de chaque module d'un premier ensemble de modules de mesure (130b, 130c, 130d) appartenant à un premier niveau hiérarchique, où le premier module de mesure (130b) est un membre du premier ensemble, à un agrégat d'un relevé de mesure respectif provenant de chaque module d'un deuxième ensemble de modules de mesure (130a) appartenant à un deuxième niveau hiérarchique, le deuxième niveau hiérarchique étant en amont du premier niveau hiérarchique, dans lequel la somme des relevés de mesure provenant du premier ensemble de modules de mesure (130b, 130c, 130d) est substantiellement égale à l'agrégat des relevés de mesure provenant du deuxième ensemble de modules de mesure (130a) si aucune erreur de mesure n'est présente, et dans lequel la divergence est catégorisée comme une erreur de mesure si la différence entre l'agrégat des relevés de mesure provenant des modules de mesure de deuxième niveau hiérarchique (130a) et la somme des relevés de mesure provenant des modules de mesure de premier niveau hiérarchique (130b, 130c, 130d) est supérieure à une valeur seuil d'erreur de mesure.

9. Support de stockage non volatil lisible par un ordinateur sur lequel sont stockées des instructions pour implémenter le procédé selon l'une quelconque des revendications 1 à 7, lorsqu'elles sont exécutées sur un serveur de service ayant des capacités de traitement selon la revendication 8.
